# EUROPÄISCHE PATENTSCHRIFT

(11) **EP 4 258 520 B1**
(45) Veröffentlichungstag und Bekanntmachung des Hinweises auf die Patenterteilung: **05.06.2024**
(21) Anmeldenummer: 23164930.2
(22) Anmeldetag: 29.03.2023
(51) Int. Cl.: H02K 15/00, H02K 16/00, H02K 41/02

(54) **PLANAR-ANTRIEBSSYSTEM UND EIN VERFAHREN ZUR MONTAGE UND DEMONTAGE VON STATORMODULEN**
PLANAR DRIVE SYSTEM AND A METHOD FOR ASSEMBLING AND DISASSEMBLING STATOR MODULES
SYSTÈME D'ENTRAÎNEMENT PLANAIRE ET PROCÉDÉ DE MONTAGE ET DE DÉMONTAGE DE MODULES DE STATOR

(30) Priorität: 05.04.2022 DE 102022108188
(43) Veröffentlichungstag der Anmeldung: 11.10.2023
(73) Patentinhaber: Syntegon Technology GmbH, 71332 Waiblingen (DE)
(72) Erfinder: Schwarz, Sebastian, 91616 Neusitz (DE); Kleinert, Marcus, 74599 Wallhausen (DE)
(74) Vertreter: DREISS Patentanwälte PartG mbB

(56) Entgegenhaltungen:
- CA-A1- 3 143 896
- CA-C- 2 692 956
- CA-C- 3 086 617
- CN-A- 114 142 709
- DE-A1-102008 005 779
- DE-A1-102014 205 819
- US-A1- 2020 031 594
- US-B2- 6 545 375

## Beschreibung

Die Erfindung betrifft ein Planar-Antriebssystem mit Merkmalen des Anspruchs 1 und ein Verfahren zur Montage und Demontage von Statormodulen in einem Planar-Antriebssystem mit Merkmalen des Anspruchs 14.

In herkömmlichen Planar-Antriebssystemen ist eine Bewegungsfläche für einen Mover des Planar-Antriebssystems aus mehreren Statormodulen aufgebaut, die in der Regel bündig aneinanderschließen. Die Statormodule weisen jeweils eine Transportfläche auf und sind üblicherweise auf ihrer der Transportfläche gegenüberliegenden Rückseite mit einer Grundplatte verbunden (üblicherweise verschraubt). Zum Montieren/Demontieren der Statoren werden diese üblicherweise mit ihrer Rückseite auf die Grundplatte aufgebracht bzw. von dieser entfernt. Dabei werden die Statormodule mit ihrer Rückseite voran eingesetzt und montiert.

So kann bspw. ein Statormodul, das von allen Seiten von weiteren Statormodulen umgeben ist, nur mit größerem Aufwand montiert bzw. demontiert werden. Das Greifen eines solchen Statormoduls muss bspw. mit einem Saugnapf an der Transportfläche erfolgen, da die angrenzenden Statormodule den seitlichen Zugang versperren. Alternativ können die angrenzenden Statormodule demontiert werden, um den seitlichen Zugang zu ermöglichen.

Ist bspw. eine Abdeckplatte (bspw. zur Verbesserung der Oberflächeneigenschaften) auf die Statormodul-Transportflächen aufgebracht, wird die Montage/Demontage einzelner Statormodulen weiter erschwert. Die Abdeckplatte muss bei jeder Montagetätigkeit entfernt und erneut aufgebracht werden, da diese den Zugang von oben (in Richtung der Transportfläche) blockiert. Wegen der oftmals geringen Stärke der Abdeckplatte (evtl. auch Folie) ist eine zerstörungsfreie Montage/Demontage umständlich.

Für die Montage/Demontage von Statormodulen werden in einigen Fällen zwei Personen benötigt (bspw. bei größeren Statormodul-Flächen für die im Zentrum liegenden Statormodule im Vertikal-Überkopfbetrieb), da die Verschraubung und das Einsetzen des Statormoduls auf zwei gegenüberliegenden Seiten der Grundplatte erfolgt (das Einsetzen von oben auf die Grundplatte; die Verschraubung mit der Grundplatte von unten).

Beim Hantieren einer Bedienperson auf der Transportfläche der Statormodule stellen sich bewegende Mover ein Sicherheitsrisiko dar und müssen vorher abgeschaltet bzw. entfernt werden. Falls eine Abdeckplatte vorhanden ist, muss diese vorher demontiert und alle auf der Abdeckplatte angeordneten Mover entfernt werden. Damit muss das gesamte Planar-Antriebssystem deaktiviert werden und es kommt zum Maschinenstillstand.

Oftmals darf die Transportoberfläche der Statormodule nicht betreten werden. Daher können, insbesondere bei größeren Planar-Antriebssystemen, die innenliegenden Statoren nur mittels eines Krans oder ähnlichem erreicht werden.

In pharmazeutischen Anlangen führt die Montage/Demontage eines Statormoduls zu aufwändigen Reinigungs- und Sterilisationsprozessen, da der Reinraum, in dem die Mover angeordnet sind, betreten werden muss.

DE 43 00 197 A1, JP 2015 - 79 908 A, CA 3 143 896 A1 und DE 10 2014 205 819 A1 offenbaren jeweils ein Planar-Antriebssystem.

Es ist daher Aufgabe der Erfindung ein Planar-Antriebssystem und ein Verfahren zur Montage und Demontage mindestens eines Statormoduls in einem Planar-Antriebssystem bereitzustellen, wobei die Montage/Demontage einzelner Statormodule optimiert wird und die obigen Nachteile ausgeräumt werden.

Diese Aufgabe wird durch ein Planar-Antriebssystem mit den Merkmalen des Anspruchs 1 gelöst, wobei das Planar-Antriebssystem wenigstens zwei Statormodule und einen Rahmen umfasst. Vorzugsweise weist das Planar-Antriebssystem eine Vielzahl von Statormodulen auf.

Jedes der Statormodule weist einen Grundkörper mit einer Transportfläche und einer der Transportfläche gegenüberliegenden Rückseite auf. Dabei ist mit Transportfläche vorliegend die Fläche, auf der ein Mover sich bewegt, gemeint. Die Transportfläche ist vorzugsweise als plane (ebene) Fläche ausgebildet. Die Transprotfläche kann im Betrieb auch unter einer Abdeckplatte angeordnet sein, sie ist die dem Mover zugewandte Seite des Statormoduls.

Jedes der Statormodule weist weiter eine an der Rückseite des Grundkörpers lösbar angebrachte Montageplatte auf. Die Montageplatte kann bspw. mittels Schrauben und/oder Passstiften an den Grundkörper angebracht sein.

Der Rahmen umfasst mehrere Aufnahmen. Jede Aufnahme ist zur Aufnahme eines Statormoduls eingerichtet. Die Aufnahmen können eine rechteckige oder quadratische Form aufweisen. Die Aufnahmen können gitterförmig, insbesondere schachbrettartig, im Rahmen angeordnet sein bzw. ein gitterförmigen es, insbesondere schachbrettartiges, Muster bilden. Die Aufnahmen liegen also insbesondere derart nebeneinander, dass über die gesamte Fläche des Rahmens Aufnahmen verteilt angeordnet sind und mit Statormodulen bestückt werden können, um eine durchgängige Fläche zu bilden auf der der Mover bewegt werden kann.

Die Statormodule können mit der Transportfläche voran, insbesondere entlang einer Einsetzrichtung, in den Rahmen bzw. deren Aufnahmen eingesetzt werden und sind mittels eines Verriegelungsmechanismus in den Aufnahmen arretierbar bzw. können mit dem Rahmen lösbar verbunden werden.

Statormodule können während des Betriebs des Planar-Antriebssystems in den Rahmen bzw. dessen Aufnahmen eingesetzt und/oder aus dem Rahmen bzw. dessen Aufnahmen entnommen werden. Die Statormodule lassen sich durch lösen des Verriegelungsmechanismus aus dem Rahmen entnehmen und können quasi nach "unten" also in die von der Transportfläche abgewandte Richtung aus dem Rahmen entnommen werden. Beim Entnehmen und Einfügen der Statormodule muss das Planar-Antriebssystem also nicht von der Transportfläche angegangen werden, sondern Einfügen, verriegeln, entriegeln und Entnehmen der Statormodule kann von der gegenüberliegenden Seite, also von der "Unterseite", her erfolgen.

Das Planar-Antriebssystem kann mindestens einen Mover, insbesondere mehrere Mover, umfassen, der sich entlang der Transportfläche der Statormodule (angetrieben durch die Statormodule) bewegen kann.

Damit können die Statormodule mit einfachen Mitteln sicher montiert und demontiert (bspw. zu Wartungszwecken) werden. Einzelne Statormodule können separat montiert und demontiert werden. Dabei müssen andere, insbesondere benachbarte, Statormodule nicht in den Montage- bzw. Demontage-Vorgang miteinbezogen werden.

Einzelne Statormodule können bspw. während des Betriebs des Planar-Antriebssystems montiert und demontiert werden. Die Statormodule können dabei in den Rahmen mit ihrer Transportfläche voran (in die Einsetzrichtung) und aus dem Rahmen mit ihrer Rückseite voran (entgegen der Einsetzrichtung) montiert bzw. demontiert werden. Die Statormodule können also bezogen auf die eventuell vorhandenen Abdeckplatte und Mover (siehe unten) von unten montiert und demontiert werden. Daher müssen weder die Mover noch die Abdeckplatte vorab entfernt werden. Dies erhöht die Zugänglichkeit der Statormodule und die Wartungsfreundlichkeit des Planar-Antriebssystems.

Vorliegend ist die Transportfläche oben und die Rückseite unten am Grundkörper angeordnet.

Der Verriegelungsmechanismus kann mehrere schwenkbare Elemente umfassen, die in einem eingesetzten Zustand des jeweiligen Statormoduls in eine Schließstellung schwenkbar sind, in der sie jeweils in eine Ausnehmung im Rahmen eingreifen, um das Statormodul in dem Rahmen formschlüssig zu arretieren. Die Ausnehmungen können in den Aufnahmen (bzw. deren Wandungen) des Rahmens angeordnet sein.

Die Ausnehmung kann als Öffnung (bspw. Loch bzw. Langloch) im Rahmen ausgebildet sein. Die Ausnehmungen können jedoch auch Vertiefungen sein, die das Material des Rahmens nicht durchbrechen. Die Aufnahmen sind hintergreifbar durch den Verriegelungsmechanismus, so dass die Statormodule formschlüssig festlegbar sind.

Die schwenkbaren Elemente können an oder in der Montageplatte angeordnet sein.

Die schwenkbaren Elemente können als Verschlusshaken oder schwenkbare Riegel ausgebildet sein. So kann auf einfache Art und Weise eine sichere und insbesondere entlang der Einsetzrichtung formschlüssige Verbindung realisiert werden.

Die Montageplatte kann mittels Schrauben lösbar am Grundkörper, insbesondere an der Rückseite des Grundkörpers, befestigt sein.

Der Grundkörper kann einen rechteckigen oder quadratischen Querschnitt aufweisen.

In der Schließstellung ragen die schwenkbaren Elemente des Verriegelungsmechanismus vom Grundkörper bzw. von der Montageplatte ab.

Mittels des Verriegelungsmechanismus bzw. dessen schwenkbarer Elemente kann eine formschlüssige Verbindung insbesondere entlang der Einsetzrichtung zwischen Montageplatte bzw. des daran befestigten Statormoduls und dem Rahmen umgesetzt werden. Insbesondere kann das Statormodul nicht in den Rahmen eingesetzt werden, wenn der Verriegelungsmechanismus sich in der Schließstellung befindet. Wenn der Verriegelungsmechanismus sich in der Schließstellung befindet, ragen die schwenkbaren Elemente von der Montageplatte bzw. vom Grundkörper ab, und verhindern ein Einsetzen des Statormoduls entlang der Einsetzrichtung in den Rahmen. In der Schließstellung sind die schwenkbaren Elemente insbesondere ausgeschwenkt.

Der Grundkörper kann vier Seitenflächen aufweisen, die orthogonal zu der Transportfläche angeordnet sind. Zwei benachbarte Seitenflächen können orthogonal zu einander angeordnet (orientiert) sein.

Der Rahmen kann mehrere miteinander verbundene Rahmenelemente umfassen. Die Rahmenelemente können lösbar miteinander verbunden sein. Es ist denkbar, dass der Rahmen aus Rahmenelementen bestehen kann. In den Rahmenelementen können Ausnehmungen angeordnet sein, in die die schwenkbaren Elemente des Verriegelungsmechanismus eingreifen können (in der Schließstellung des Verriegelungsmechanismus).

Die Aufnahmen des Rahmens können aus den Rahmenelementen zusammengesetzt sein. Mit anderen Worten, die Rahmenelemente können die Wandungen der Aufnahmen des Rahmens bilden.

Die Rahmenelemente können gitterförmig, insbesondere schachbrettartig, angeordnet sein. Durch die einzelnen Rahmenelemente, können unterschiedliche Gitterstrukturen des Rahmens umgesetzt werden. Die Rahmenelemente können lösbar miteinander, insbesondere formschlüssig, verbunden sein. Einzelne Rahmenelemente können dem Rahmen entnommen oder hinzugefügt werden.

Die Rahmenelemente können bspw. als Laserzuschnitte besonders günstig hergestellt werden. Bei Bedarf kann eine kraft- und/oder stoffschlüssige Verbindung zwischen zwei miteinander verbundenen Rahmenelementen ergänzt werden.

Die Rahmenelemente können unterschiedlich dick (mit unterschiedlichen Wandstärken) und unterschiedlich lang ausgebildet sein. So kann ein Modulbaukasten erstellt werden, mit dem unterschiedliche Rahmenstukturen bzw. - designs umgesetzt werden können.

Im eingesetzten Zustand kann jedes Statormodul mit mindestens einer Seitenfläche, insbesondere vollumfänglich (mit allen Seitenflächen), an der Aufnahme anliegen (die Aufnahme kontaktieren). Es ist ebenso denkbar, dass nur zwei oder drei Seiten des Statormoduls an der Aufnahme anliegen (die Aufnahme kontaktieren).

Der Verschlussmechanismus kann in eine Freigabestellung überführbar sein. In der Freigabestellung kann ein Einsetzen des jeweiligen Statormoduls in den Rahmen bzw. dessen Aufnahmen ermöglicht werden. Insbesondere ragen die schwenkbaren Elemente in der Freigabestellung nicht von der Montageplatte bzw. vom Grundkörper des Statormoduls ab.

In der Freigabestellung kann die formschlüssige Verbindung zwischen dem Verschlussmechanismus und den Ausnehmungen im Rahmen bzw. in den Rahmenelementen, insbesondere entlang der Einsetzrichtung, gelöst werden. In der Freigabestellung sind die schwenkbaren Elemente insbesondere eingeschwenkt.

Der Rahmen bzw. deren Rahmenelemente kann eine Trennwand zwischen benachbarten Statormodulen darstellen. Mit anderen Worten, benachbarte Statormodule liegen nicht aneinander an, sondern sind insbesondere durch ein Rahmenelement voneinander getrennt (im eingesetzten Zustand der Statormodule). Der so entstehende Abstand zwischen zwei benachbarten Statormodulen ist abhängig von der Dicke des jeweiligen Rahmenelements. Bewegt sich ein Mover über diesen Abstand, kann es zu einem Performanceverlust kommen (Positioniergenauigkeit, zulässige Zuladung, Dynamik des Movers, etc.), da hier aufgrund des Abstands (bzw. Fehlens eines Statormoduls) kein oder nur ein unzureichendes Magnetfeld erzeugt werden kann. Die Wandstärken der Rahmenelemente bzw. des Rahmens werden daher üblicherweise gering gehalten.

Sind an bestimmten Stellen im Planar-Antriebssystem Statormodul-Übergänge mit hohen Performanceanforderungen nötig, kann das Rahmenlayout angepasst werden. Durch das Ersetzen einzelner Rahmenelemente durch Rahmenelemente mit geringerer Dicke kann der Abstand zwischen benachbarten Statormodulen minimiert werden.

Durch das Entfernen einzelner Rahmenelemente oder Wände der Rahmenelemente kann der Abstand zwischen benachbarten Statormodulen ausgeräumt werden. In diesem Fall können benachbarte Statormodule aneinander anliegen. Zur Befestigung dieser Statormodule kann jeweils eine andere (größere) Montageplatte benutzt werden, die den Größenunterschied durch ein dünneres oder ein fehlendes Rahmenelement ausgleichen kann.

Das Planar-Antriebssystem kann weiter mindestens ein Baugruppenmodul umfassen. An dem Baugruppenmodul kann die Montageplatte lösbar angebracht sein. Das Baugruppenmodul kann in eine der Aufnahmen des Rahmens einsetzbar und mittels des Verriegelungsmechanismus in der Aufnahme arretierbar sein. Jede Aufnahme kann zur Aufnahme eines Baugruppenmoduls eingerichtet sein.

Die Montageplatte kann an dem Baugruppenmodul bspw. mittels Schrauben und/oder Passstiften angebracht sein. Das Baugruppenmodul kann während des Betriebs des Planar-Antriebssystems in den Rahmen bzw. dessen Aufnahmen eingesetzt und/oder aus dem Rahmen bzw. dessen Aufnahmen entnommen werden. Bei dem Baugruppenmodul kann es sich bspw. um eine Wiegezelle, eine Füllstandsmesszelle oder andere Prozessstation handeln.

Das Baugruppenmodul kann in Form und Größe einem Statormodul entsprechen, sodass die Montage/Demontage des Baugruppenmoduls analog zur Montage/Demontage eines Statormoduls umgesetzt werden kann.

Das Planar-Antriebssystem kann weiter eine Abdeckplatte umfassen, die zumindest teilweise, insbesondere vollständig, den Rahmen, die Statormodule und/oder das mindestens eine Baugruppenmodul abdeckt. Die Abdeckplatte deckt insbesondere den Rahmen, alle Statormodule und alle eventuell vorhandenen Baugruppenmodule ab. Entlang (oberhalb) der Abdeckplatte können Mover bewegt werden, die mittels der (unterhalb) der Abdeckplatte angeordneten Statormodulen magnetisch angetrieben werden. Da die Statormodule und eventuell vorhandene Baugruppenmodule bspw. zu Wartungszwecken in Einsetzrichtung eingesetzt und entgegen der Einsetzrichtung entnommen werden (also von unten), ist eine Demontage der Abdeckplatte und der Mover nicht nötig.

Das Planar-Antriebssystem weist insbesondere einem sandwichartigen Aufbau auf, wobei die Statormodule unten und die Mover oben angeordnet sind. Die Transportfläche in der jeweiligen Statormodule zeigen in Richtung Mover, nach oben. Oberhalb der Statormodule bzw. deren Transportflächen und unterhalb der Mover kann eine Abdeckplatte angeordnet sein. Mit anderen Worten die Statormodule können in Bezug auf die Abdeckplatte unterhalb der Abdeckplatte angeordnet sein. Oberhalb der Abdeckplatte können Mover angeordnet sein. Die Abdeckplatte kann in Bezug auf die Mover unterhalb der Mover angeordnet sein.

Die Abdeckplatte kann mit dem Rahmen (bzw. dessen Aufnahmen, Rahmenelementen) mindestens an einem Befestigungspunkt, insbesondere an mehreren Befestigungspunkten, insbesondere lösbar, befestigt sein. Der Befestigungspunkt kann am Rahmen (bzw. dessen Aufnahmen, Rahmenelementen) zwischen zwei benachbarten Statormodulen angeordnet sein.

Die Abdeckplatte auf den Statormodulen kann sich bei größeren Flächen wölben und "Falten" werfen. Dieser Effekt kann auftreten, da die Platte üblicherweise nur an den äußeren Kanten befestigt wird und durch ihre üblicherweise geringe Materialstärke instabil werden kann. Der geringe Abstand zwischen der Abdeckplatte und den sich oberhalb der Abdeckplatte bewegenden Mover erfordert jedoch eine Abdeckplatte, die eine möglichst ebene (Ober-)Fläche aufweist.

Da die Abdeckplatte an dem Rahmen (bzw. dessen Rahmenelementen, Aufnahmen) zwischen den Statormodulen befestigt werden kann, wird eine Wölbung der Abdeckplatte bzw. Faltung verhindert oder zumindest reduziert. Mit der Zunahme der Befestigungspunkte kann eine Wölbung bzw. Faltung weiter reduziert werden. Die Befestigung der Abdeckplatte auf dem Rahmen (bzw. dessen Rahmenelementen, Aufnahmen) kann durch alle gängigen Methoden erfolgen (form-, kraft-, und/oder stoffschlüssig).)

In der Montageplatte können Leistungs- bzw. Signalleitungen integriert sein. Dies ermöglicht einen flacheren Aufbau des Planar-Antriebssystems. Es kann ein Schnellwechselsystem realisiert werden. Steckvorgänge von Signal-/Leistungskabel können entfallen. Montagefehler durch falsch verkabelte Signalleitungen können vermieden werden (Verpolsicherung, etc.).

Die obige Aufgabe wird weiter durch ein Verfahren zur Montage und Demontage von Statormodulen in einem Planar-Antriebssystem mit den Merkmalen des Anspruchs 14 gelöst.

Das Verfahren umfasst die Schritte:
Bereitstellen von mindestens zwei Statormodulen, wobei jedes der Statormodule einen Grundkörper mit einer Transportfläche und einer der Transportfläche gegenüberliegenden Rückseite aufweist;
Bereitstellen eines Rahmens mit mehreren Aufnahmen, wobei jede Aufnahme zur Aufnahme eines Statormoduls eingerichtet ist;
Einsetzen der Statormodule mit der Transportfläche voran in die Aufnahmen des Rahmens;
Arretieren der Statormodule in den jeweiligen Aufnahmen mittels jeweils eines Verriegelungsmechanismus.

Auf diese Weise können die Statormodule in den Rahmen (bzw. dessen Aufnahmen) und somit in das Planar-Antriebssystem montiert werden.

Das Verfahren kann weiter den Schritt umfassen:
Herausnehmen der Statormodule mit der Rückseite voran aus den Aufnahmen des Rahmens.

Auf diese Weise können die Statormodule aus dem Rahmen (bzw. dessen Aufnahmen) und somit aus dem Planar-Antriebssystem demontiert werden.

Das Planar-Antriebssystem kann ein Planar-Antriebssystem gemäß obiger Ausführungen sein. Hinsichtlich der damit erzielbaren Vorteile wird auf die diesbezüglichen Ausführungen zum Planar-Antriebssystem verwiesen. Zur weiteren Ausgestaltung des Verfahrens können die im Zusammenhang mit dem Planar-Antriebssystem beschriebenen und/oder die nachfolgend noch erläuterten Maßnahmen dienen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Explosionsdarstellung eines Planar-Antriebssystems;
- Fig. 2: das Planar-Antriebssystem gemäß Figur 1 in einem teilweise zusammengesetzten Zustand;
- Fig. 3: eine Explosionsdarstellung eines Statormoduls, einer Montageplatte und eines Verriegelungsmechanismus;
- Fig. 4: das Statormodul, die Montageplatte und den Verriegelungsmechanismus gemäß Figur 3 im zusammengesetzten Zustand;
- Fig. 5: perspektivische Ansicht auf ein Statormodul und eine Aufnahme;
- Fig. 6: eine Ansicht von unten auf das Statormodul und die Aufnahme gemäß Figur 5;
- Fig. 7: einen Schnitt A-A aus Figur 6 wobei der Verriegelungsmechanismus sich in einer Freigabestellung befindet;
- Fig. 8: einen Ausschnitt X aus der Figur 7;
- Fig. 9: einen Schnitt A-A aus Figur 6 wobei der Verriegelungsmechanismus sich in einer Schließstellung befindet und
- Fig. 10: einen Ausschnitt Y aus Figur 9.

In der nachfolgenden Beschreibung sowie in den Figuren tragen sich entsprechende Bauteile und Elemente gleiche Bezugszeichen. Der besseren Übersichtlichkeit wegen sind nicht in allen Figuren sämtliche Bezugszeichen wiedergegeben.

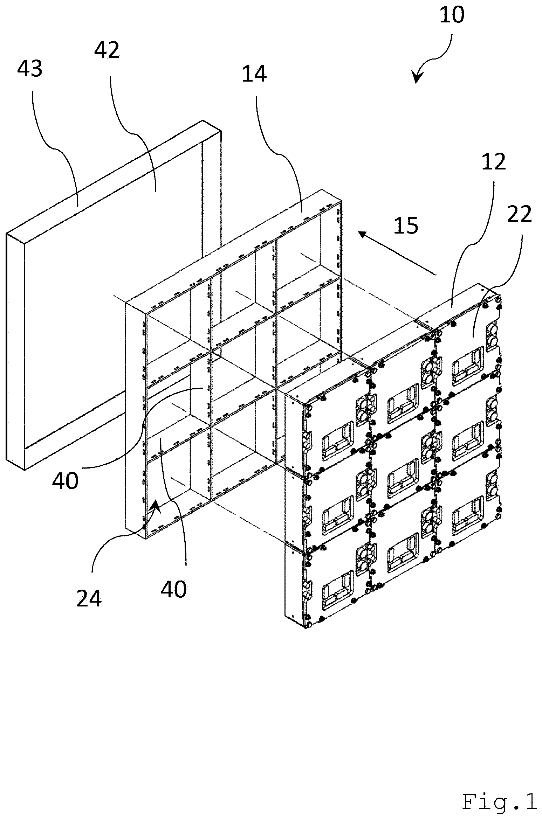

Figur 1 zeigt eine Explosionsdarstellung eines Planar-Antriebssystems 10. Das Planar-Antriebssystem 10 umfasst vorliegend neun Statormodule 12, einen Rahmen 14 und eine Abdeckplatte 42.

Der Rahmen 14 weist vorliegend neun Aufnahmen 24, wobei jede der Aufnahmen 24 eingerichtet ist, um jeweils ein Statormodul 12 aufnehmen zu können.

Vorliegend ist der Rahmen 14 aus mehreren Rahmenelementen 40 aufgebaut. Die Rahmenelemente 40 bilden zudem die schachbrettartig angeordneten Aufnahmen 24. Die Rahmenelemente 40 stellen die Wandungen der Aufnahmen 24 dar.

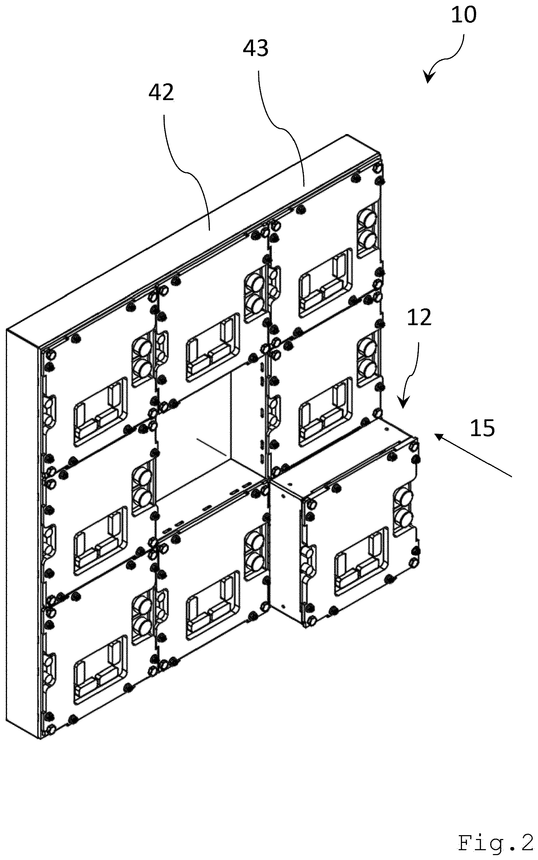

Figur 2 zeigt das Planar-Antriebssystem 10 gemäß Figur 1 in einem teilweise zusammengesetzten Zustand. Acht der neun Statormodule 12 sind in die jeweiligen Aufnahmen 24 des Rahmens 14 entlang einer Einsetzrichtung 15 eingesetzt worden. Die Einsetzrichtung 15 ist in den Figuren 1 und 2 mittels eines Pfeils markiert.

Die Abdeckplatte 42 weist vorliegend einen Rand 43 auf. Damit deckt die Abdeckplatte 42 den Rahmen 14 und die in den Aufnahmen 24 des Rahmens 14 aufgenommenen Statormodule 12 im zusammengesetzten Zustand von oben und seitlich ab.

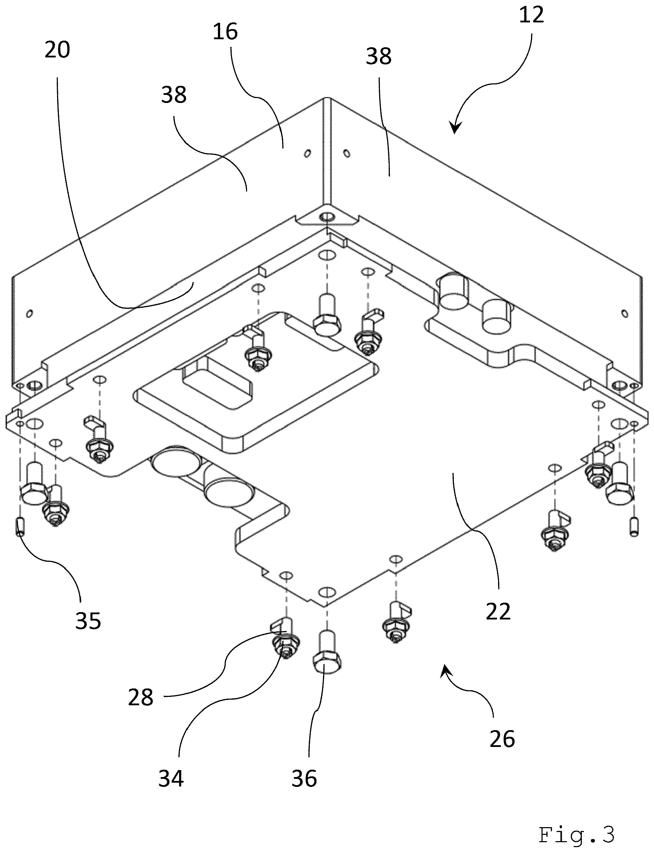

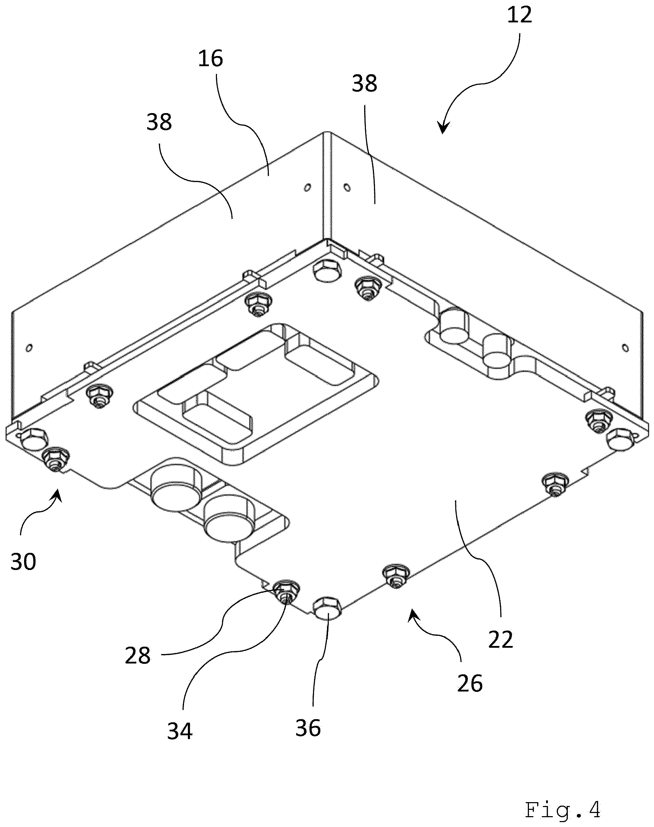

Figur 3 zeigt ein Statormodul 12, eine Montageplatte 22 und einen Verriegelungsmechanismus 26 in einer Explosionsdarstellung und Figur 4 zeigt diese Bestandteile im zusammengefügten Zustand.

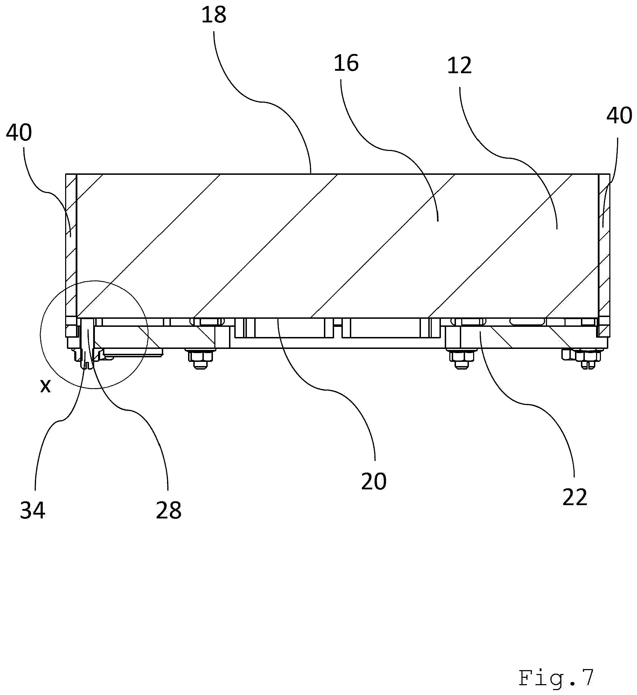

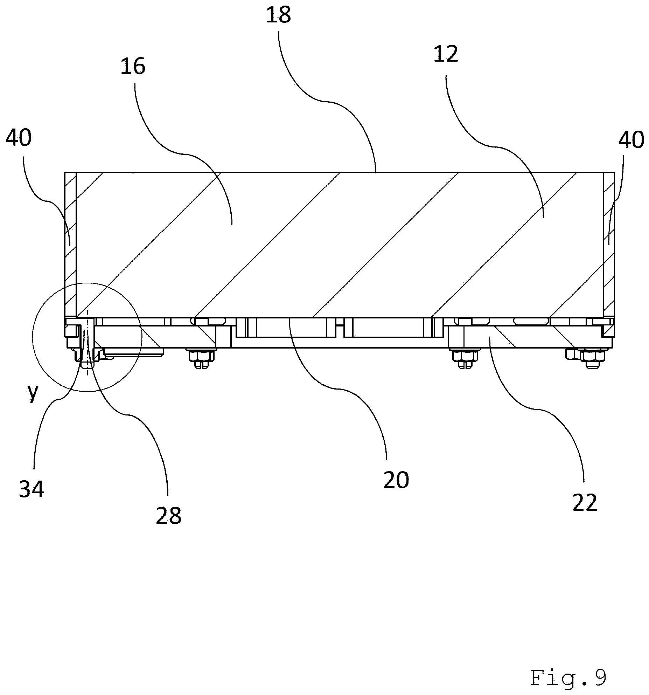

Das Statormodul 12 weist einen Grundkörper 16 mit einer Transportfläche 18 auf (vgl. Figuren 7 und 9). Der Grundkörper 16 weist eine der Transportfläche 18 gegenüberliegenden Rückseite 20 auf. Der Grundkörper 16 weist vier Seitenflächen 38 auf, die orthogonal zur Transportfläche angeordnet sind.

Auf die Rückseite 20 des Grundkörpers 16 wird eine Montageplatte 22 angebracht und mittels vier Schrauben 36 mit dem Grundkörper 16 verschraubt. Vorliegend werden an zwei gegenüberliegenden Ecken der Montageplatte 22 zwei Passstifte 35 eingesetzt, die die Montageplatte 22 mit dem Grundkörper 16 (bzw. dessen Rückseite 20) verbinden.

Der Verriegelungsmechanismus 26 ist vorliegend in der Montageplatte 22 angeordnet. Der Verriegelungsmechanismus 26 besteht aus acht schwenkbaren Elementen 28, die vorliegend in Form von Verschlusshaken 34 ausgebildet sind. Jeweils zwei der schwenkbaren Elemente 28 sind an der Montageplatte 22 einander gegenüberliegend angeordnet.

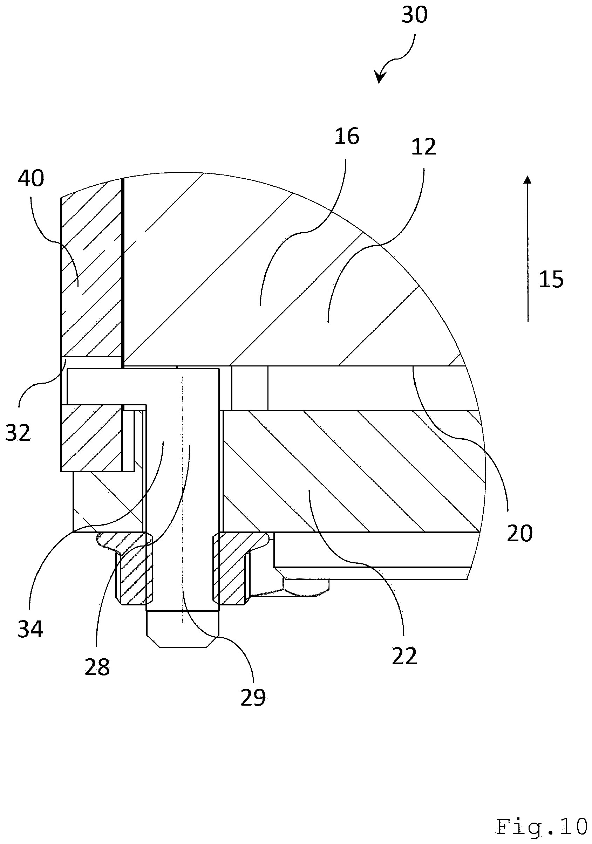

Die schwenkbaren Elemente 28 sind vorliegend in einer Schließstellung 30 (vgl. Figur 9 und 10) dargestellt. In der Schließstellung 30 ragen die schwenkbaren Elemente 28 von der Montageplatte 22 bzw. vom Grundkörper 16 des Statormoduls 12 ab. Mit anderen Worten, in der Schließstellung 30 sind die schwenkbaren Elemente 28 ausgeschwenkt. In der Schließstellung 30 werden die an die Montageplatte 22 befestigten Statormodule 12 innerhalb der Aufnahmen 24 arretiert.

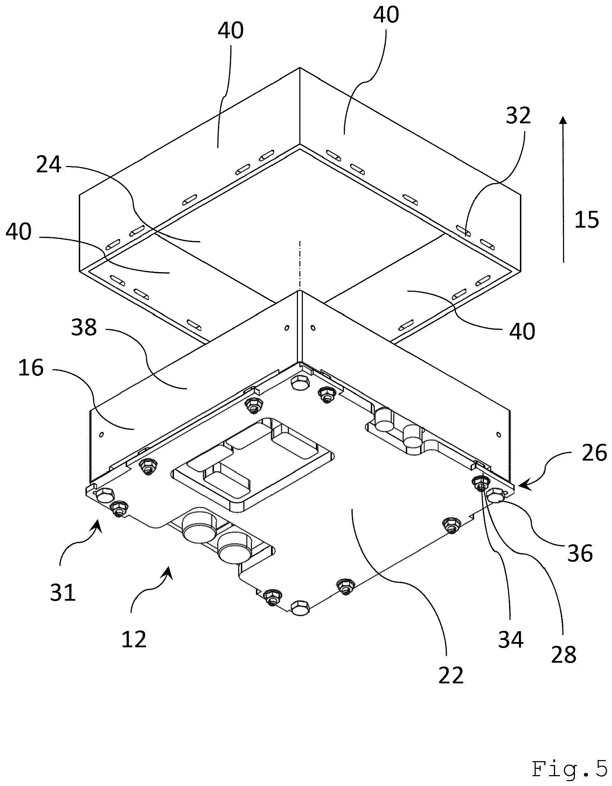

Figur 5 zeigt eine perspektivische Ansicht auf ein Statormodul 12 und eine Aufnahme 24. Vorliegend bilden vier Rahmenelemente 40 die Aufnahme 24. Die Rahmenelemente 40 stellen somit die Wandungen der quadratischen Aufnahme 24 dar. Die Rahmenelemente 40 weisen Ausnehmungen 32 auf, die vorliegend in Form von Langlöchern ausgebildet sind.

Zum Einsetzen des Statormoduls 12 in die Aufnahme 24 wird der Verriegelungsmechanismus 26 in eine Freigabestellung 31 überführt, in der die schwenkbaren Elemente 28 des Verriegelungsmechanismus 26 eingeschwenkt sind. Mit anderen Worten, die schwenkbaren Elemente 28 ragen nicht mehr von der Montageplatte 22 bzw. vom Grundkörper 16 des Statormoduls 12 ab.

In der Freigabestellung blockieren die schwenkbaren Elemente 28 des Verriegelungsmechanismus 26 nicht das Einsetzen des Statormoduls in die Aufnahme 24. Das Statormodul 12 kann so in Einsetzrichtung 15 bewegt werden und mit der Transportfläche 18 voran in die Aufnahme 24 eingesetzt werden.

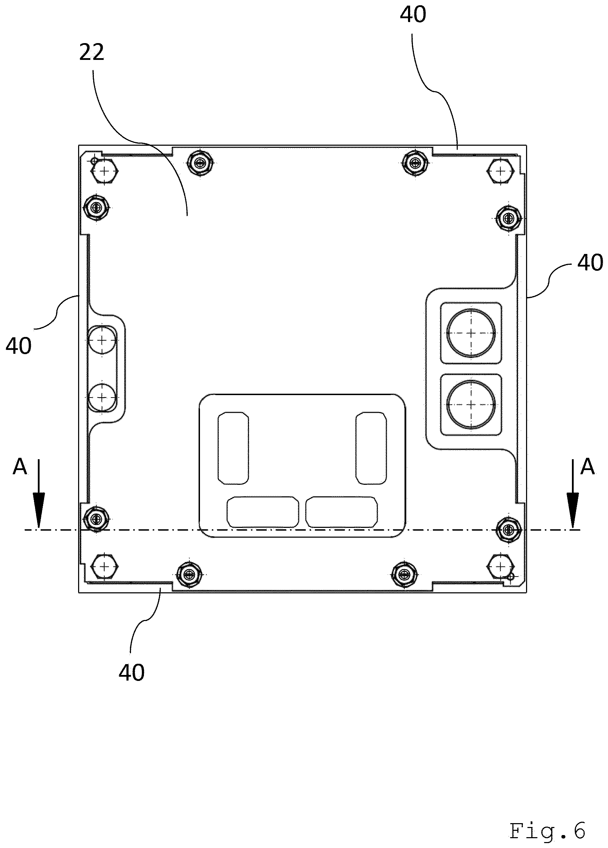

Figur 6 zeigt eine Ansicht von unten auf das Statormodul 12 und die Aufnahme 24 gemäß Figur 5. Es ist ein Schnitt A-A mittels einer gestrichelten Linie markiert.

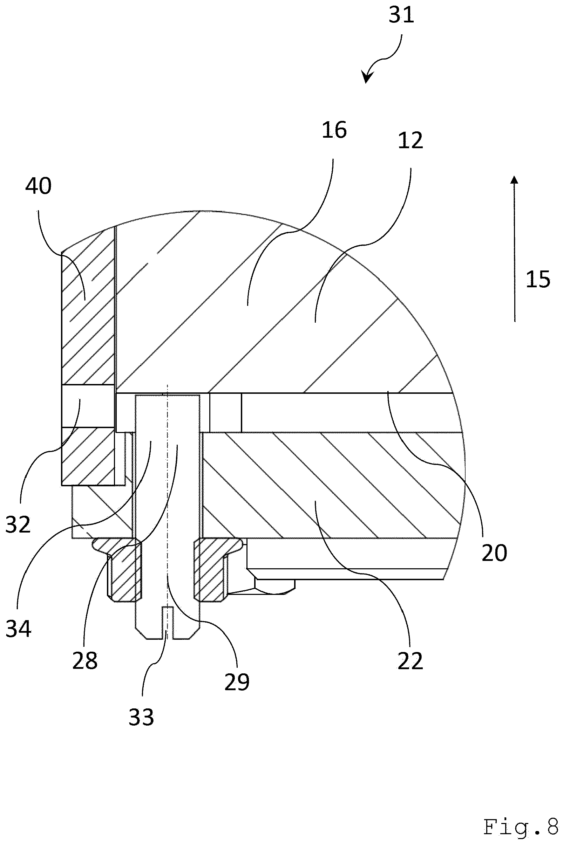

Figur 7 zeigt einen Schnitt A-A aus Figur 6 und Figur 8 zeigt einen Ausschnitt X aus Figur 7.

In den Figuren 7 und 8 ist das Statormodul 12 samt Montageplatte 22 und dem Verriegelungsmechanismus 26 in die Aufnahme 24, die durch die Rahmenelemente 40 gebildet wird, eingesetzt worden. Der Verriegelungsmechanismus 26 befindet sich in der Freigabestellung 31.

Wie besonders gut aus Figur 8 ersichtlich ist, sind die schwenkbaren Elemente 28 des Verriegelungsmechanismus 26 in der Freigabestellung 31 eingeschwenkt und greifen nicht in die Ausnehmungen 32 der Rahmenelemente 40. Das Statormodul 12 ist daher zwar in der Aufnahme 24 eingesetzt, jedoch noch nicht in der Aufnahme 24 arretiert. Das Statormodul 12 kann solange sich der Verriegelungsmechanismus 26 in der Freigabestellung 31 befindet entlang der Einsetzrichtung 15 hin und her bewegt werden.

Figur 9 zeigt einen Schnitt A-A aus Figur 6 und Figur 10 zeigt einen Ausschnitt Y aus Figur 9.

In den Figuren 9 und 10 ist das Statormodul 12 samt Montageplatte 22 und dem Verriegelungsmechanismus 26 in die Aufnahme 24, die durch die Rahmenelemente 40 gebildet wird, eingesetzt worden. Der Verriegelungsmechanismus 26 befindet sich in der Schließstellung 30.

In der Schließstellung 30 sind die schwenkbaren Elemente 28 ausgeschwenkt und greifen in die Ausnehmungen 32 der Rahmenelemente 40. Es entsteht insbesondere entlang der Einsetzrichtung 15 eine formschlüssige Verbindung. Damit ist das Statormodul 12 in der Aufnahme 24 arretiert.

Zum Herausnehmen des Statormoduls werden die schwenkbaren Elemente 28 wieder eingeschwenkt. Der Verriegelungsmechanismus 26 wird also in die Freigabestellung 31 (vgl. Figur 8) überführt. Sobald sich der Verriegelungseinrichtung 26 in der Freigabestellung 31 befindet und der Formschluss zwischen den schwenkbaren Elementen 28 und den Ausnehmungen 32 aufgehoben wird, kann das Statormodul 12 entgegen der Einsetzrichtung 15 bewegt werden und mit der Rückseite 20 voran aus der Aufnahme 24 entnommen werden.

Die schwenkbaren Elemente 28 sind entlang deren Schwenkachsen 29 schwenkbar in der Montageplatte 22 aufgenommen (vgl. Figuren 8 und 10). Die schwenkbaren Elemente 28 weisen vorliegend an ihrem dem Grundkörper 16 des Statormoduls 12 abgewandten Ende einen Schlitz 33 auf (vgl. Figur 8). Damit können die schwenkbaren Elemente 28 bspw. mittels eines Schlitzschraubendrehers, der in den Schlitz 33 eingreift und gedreht wird, hin und her geschwenkt werden. Entsprechend kann der Verriegelungsmechanismus 26 vorliegend mittels eines Schlitzschraubendrehers aus der Freigabestellung 31 in die Schließstellung 30 und umgekehrt überführt werden.

## Patentansprüche

1. Planar-Antriebssystem (10) umfassend
wenigstens zwei, vorzugsweise eine Vielzahl, Statormodule (12) und einen Rahmen (14),
wobei jedes der Statormodule (12) einen Grundkörper (16) mit einer Transportfläche (18) und einer der Transportfläche (18) gegenüberliegenden Rückseite (20) aufweist, und weiter eine an der Rückseite (20) des Grundkörpers (16) lösbar angebrachte Montageplatte (22),
wobei der Rahmen (14) mehrere Aufnahmen (24) umfasst, wobei jede Aufnahme (24) zur Aufnahme eines Statormoduls (12) eingerichtet ist,
wobei die Statormodule (12) mit der Transportfläche (18) voran in die Aufnahmen (24) des Rahmens (14) einsetzbar sind und mittels eines Verriegelungsmechanismus (26) in den Aufnahmen (24) arretierbar sind.

2. Planar-Antriebssystem (10) nach Anspruch 1, **dadurch gekennzeichnet, dass** der Verriegelungsmechanismus (26) mehrere schwenkbare Elemente (28) umfasst, die in einem eingesetzten Zustand des jeweiligen Statormoduls (12) in eine Schließstellung (30) schwenkbar sind, in der sie jeweils in eine Ausnehmung (32) im Rahmen (14) eingreifen, um das Statormodul (12) in dem Rahmen (14) formschlüssig zu arretieren.

3. Planar-Antriebssystem (10) nach Anspruch 2, **dadurch gekennzeichnet, dass** die schwenkbaren Elemente (28) an der Montageplatte (22) angeordnet sind.

4. Planar-Antriebssystem (10) nach Anspruch 2 oder 3, **dadurch gekennzeichnet** das die schwenkbaren Elemente (28) als Verschlusshaken (34) ausgebildet sind.

5. Planar-Antriebssystem (10) nach einem der voranstehenden Ansprüche, **dadurch gekennzeichnet, dass** die Montageplatte (22) mittels Schrauben (36) lösbar am Grundkörper (16), insbesondere an der Rückseite (20), befestigt ist.

6. Planar-Antriebssystem (10) nach einem der voranstehenden Ansprüche, **dadurch gekennzeichnet, dass** der Grundkörper (16) einen rechteckigen oder quadratischen Querschnitt aufweist.

7. Planar-Antriebssystem (10) nach einem der voranstehenden Ansprüche, **dadurch gekennzeichnet, dass** der Grundkörper (16) vier Seitenflächen (38) aufweist, die orthogonal zu der Transportfläche (18) angeordnet sind.

8. Planar-Antriebssystem (10) nach einem der voranstehenden Ansprüche, **dadurch gekennzeichnet, dass** der Rahmen (14) mehrere, insbesondere lösbar, miteinander verbundene Rahmenelemente (40) umfasst.

9. Planar-Antriebssystem (10) nach Anspruch 7 oder 8, **dadurch gekennzeichnet, dass** im eingesetzten Zustand jedes Statormodul (12) mit mindestens einer Seitenfläche (38), insbesondere vollumfänglich, an der Aufnahme (24) anliegt.

10. Planar-Antriebssystem (10) nach einem der voranstehenden Ansprüche, **dadurch gekennzeichnet, dass** das Planar-Antriebssystem (10) weiter mindestens ein Baugruppenmodul umfasst, wobei an dem Baugruppenmodul die Montageplatte (22) lösbar angebracht ist, wobei das Baugruppenmodul in eine der Aufnahmen (24) des Rahmens (14) einsetzbar ist und mittels des Verriegelungsmechanismus (26) in der Aufnahme (24) arretierbar ist.

11. Planar-Antriebssystem (10) nach einem der voranstehenden Ansprüche, **dadurch gekennzeichnet, dass** das Planar-Antriebssystem (10) weiter eine Abdeckplatte (42) aufweist, die zumindest teilweise, insbesondere vollständig, den Rahmen (14), die Statormodule (12) und/oder das mindestens eine Baugruppenmodul abdeckt.

12. Planar-Antriebssystem (10) nach dem voranstehenden Anspruch, **dadurch gekennzeichnet, dass** die Abdeckplatte (42) mit dem Rahmen (14) mindestens an einem Befestigungspunkt, insbesondere an mehreren Befestigungspunkten, befestigt ist, wobei der Befestigungspunkt am Rahmen (14) oder Rahmenelement (40) zwischen zwei benachbarten Statormodulen (12) angeordnet ist.

13. Planar-Antriebssystem (10) nach einem der voranstehenden Ansprüche, **dadurch gekennzeichnet, dass** in der Montageplatte (22) Leistungs- bzw. Signalleitungen integriert sind.

14. Verfahren zur Montage und Demontage von Statormodulen (12) in einem Planar-Antriebssystem (10) umfassend die Schritte:
- Bereitstellen von mindestens zwei Statormodulen (12), wobei jedes der Statormodule (12) einen Grundkörper (16) mit einer Transportfläche (18) und einer der Transportfläche (18) gegenüberliegenden Rückseite (20) aufweist;
- Bereitstellen eines Rahmens (14) mit mehreren Aufnahmen (24), wobei jede Aufnahme (24) zur Aufnahme eines Statormoduls (12) eingerichtet ist;
- Einsetzten der Statormodule (12) mit der Transportfläche (18) voran in die Aufnahmen (24) des Rahmens;
- Arretieren der Statormodule (12) in den jeweiligen Aufnahmen (24) mittels jeweils eines Verriegelungsmechanismus (26).

15. Verfahren nach Anspruch 14, **dadurch gekennzeichnet, dass** das Verfahren weiter den Schritt umfasst:
- Herausnehmen der Statormodule (12) mit der Rückseite (20) voran aus den Aufnahmen (24) des Rahmens (14).

16. Verfahren nach Anspruch 14 oder 15, **dadurch gekennzeichnet, dass** das Planar-Antriebssystem (10) ein Planar-Antriebssystem (10) nach einem der Ansprüche 1 bis 13 ist.

## Claims

1. Planar drive system (10) comprising
at least two, preferably a plurality of, stator modules (12) and a frame (14),
wherein each of the stator modules (12) comprises a main body (16) having a transport surface (18) and a rear side (20) opposite the transport surface (18), and also a mounting plate (22) detachably mounted on the rear side (20) of the main body (16),
wherein the frame (14) has a plurality of receptacles (24), wherein each receptacle (24) is designed to receive a stator module (12),
wherein the stator modules (12) can be inserted, with the transport surface (18) forward, into the receptacles (24) of the frame (14) and can be locked in the receptacles (24) by means of a locking mechanism (26).

2. Planar drive system (10) according to claim 1, **characterized in that** the locking mechanism (26) comprises a plurality of pivotable elements (28) which, in an inserted state of the relevant stator module (12), are pivotable into a closed position (30) in which they each engage in a cut-out (32) in the frame (14) in order to lock the stator module (12) in the frame (14) in an interlocking manner.

3. Planar drive system (10) according to claim 2, **characterized in that** the pivotable elements (28) are arranged on the mounting plate (22).

4. Planar drive system (10) according to claim 2 or 3, **characterized in that** the pivotable elements (28) are designed as closure hooks (34).

5. Planar drive system (10) according to any of the preceding claims,
**characterized in that** the mounting plate (22) is detachably fastened to the main body (16), in particular to the rear side (20), by means of screws (36).

6. Planar drive system (10) according to any of the preceding claims,
**characterized in that** the main body (16) has a rectangular or square cross section.

7. Planar drive system (10) according to any of the preceding claims,
**characterized in that** the main body (16) has four side surfaces (38) which are arranged orthogonally to the transport surface (18).

8. Planar drive system (10) according to any of the preceding claims,
**characterized in that** the frame (14) comprises a plurality of frame elements (40) connected to one another, in particular detachably.

9. Planar drive system (10) according to claim 7 or 8, **characterized in that,** in the inserted state, at least one side face (38) of each stator module (12) rests against the receptacle (24), in particular completely.

10. Planar drive system (10) according to any of the preceding claims,
**characterized in that** the planar drive system (10) further comprises at least one assembly module, wherein the mounting plate (22) is detachably mounted on the assembly module, wherein the assembly module is insertable into one of the receptacles (24) of the frame (14) and is lockable in the receptacle (24) by means of the locking mechanism (26).

11. Planar drive system (10) according to any of the preceding claims,
**characterized in that** the planar drive system (10) further comprises a cover plate (42) which covers at least partially, in particular completely, the frame (14), the stator modules (12) and/or the at least one assembly module.

12. Planar drive system (10) according to the preceding claim,
**characterized in that** the cover plate (42) is fastened to the frame (14) at least at one fastening point, in particular at a plurality of fastening points, wherein the fastening point is located on the frame (14) or frame element (40) between two adjacent stator modules (12).

13. Planar drive system (10) according to any of the preceding claims,
**characterized in that** power or signal lines are integrated in the mounting plate (22).

14. Method for the installation and removal of stator modules (12) in a planar drive system (10), comprising the steps of:
- providing at least two stator modules (12), wherein each of the stator modules (12) comprises a main body (16) having a transport surface (18) and a rear side (20) opposite the transport surface (18);
- providing a frame (14) having a plurality of receptacles (24), wherein each receptacle (24) is designed to receive a stator module (12);
- inserting the stator module (12), with the transport surface (18) forward, into the receptacles (24) of the frame;
- locking the stator modules (12) in the respective receptacles (24) by means of a locking mechanism (26) in each case.

15. Method according to claim 14, **characterized in that** the method further comprises the step of:
- taking the stator modules (12), with the rear side (20) forward, out of the receptacles (24) of the frame (14).

16. Method according to claim 14 or 15, **characterized in that** the planar drive system (10) is a planar drive system (10) according to any of claims 1 to 13.

## Revendications

1. Système d'entraînement planaire (10) comprenant au moins deux, de préférence une pluralité, de modules de stator (12) et un châssis (14),
dans lequel chacun des modules de stator (12) présente un corps de base (16) avec une surface de transport (18) et une face arrière (20) opposée à la surface de transport (18), et en outre une plaque de montage (22) montée de manière amovible sur la face arrière (20) du corps de base (16),
dans lequel le cadre (14) comprend plusieurs logements (24), dans lequel chaque logement (24) est reçu pour recevoir un module de stator (12),
dans lequel les modules de stator (12) peuvent être insérés avec la surface de transport (18) en avant dans les logements (24) du cadre (14) et peuvent être bloqués dans les logements (24) au moyen d'un mécanisme de verrouillage (26).

2. Système d'entraînement planaire (10) selon la revendication 1, **caractérisé en ce que** le mécanisme de verrouillage (26) comprend plusieurs éléments pivotants (28) qui, dans un état inséré du module de stator (12) respectif, peuvent pivoter dans une position de fermeture (30) dans laquelle ils s'engagent chacun dans un évidement (32) dans le cadre (14) afin de bloquer le module de stator (12) dans le cadre (14) par complémentarité de forme.

3. Système d'entraînement planaire (10) selon la revendication 2, **caractérisé en ce que** les éléments pivotants (28) sont disposés sur la plaque de montage (22).

4. Système d'entraînement planaire (10) selon la revendication 2 ou 3, **caractérisé en ce que** les éléments pivotants (28) sont réalisés comme des crochets de fermeture (34) .

5. Système d'entraînement planaire (10) selon l'une quelconque des revendications précédentes, **caractérisé en ce que** la plaque de montage (22) est fixée de manière amovible au corps de base (16), en particulier à la face arrière (20), au moyen de vis (36) .

6. Système selon l'une quelconque des revendications précédentes, **caractérisé en ce que** le corps de base (16) présente une section transversale rectangulaire ou carrée.

7. Système d'entraînement planaire (10) selon l'une quelconque des revendications précédentes, **caractérisé en ce que** le corps de base (16) présente quatre surfaces latérales (38) qui sont disposées orthogonalement à la surface de transport (18).

8. Système d'entraînement planaire (10) selon l'une quelconque des revendications précédentes, **caractérisé en ce que** le cadre (14) comprend plusieurs éléments de cadre (40) reliés entre eux, en particulier de manière détachable.

9. Système d'entraînement planaire (10) selon la revendication 7 ou 8, **caractérisé en ce qu'**à l'état inséré, chaque module de stator (12) s'applique avec au moins une surface latérale (38), en particulier entièrement, contre le logement (24).

10. Système d'entraînement planaire (10) selon l'une quelconque des revendications précédentes, **caractérisé en ce que** le système d'entraînement planaire (10) comprend en outre au moins un module de bloc, dans lequel la plaque de montage (22) est montée de manière amovible sur le module de bloc, dans lequel le module de bloc peut être inséré dans un des logements (24) du cadre (14) et peut être bloqué dans le logement (24) au moyen du mécanisme de verrouillage (26).

11. Système d'entraînement planaire (10) selon l'une quelconque des revendications précédentes, **caractérisé en ce que** le système d'entraînement planaire (10) présente en outre une plaque de recouvrement (42), qui recouvre au moins partiellement, en particulier complètement, le cadre (14), les modules de stator (12) et/ou le au moins un module de bloc.

12. Système d'entraînement planaire (10) selon la revendication précédente, **caractérisé en ce que** la plaque de recouvrement (42) est fixée au cadre (14) au moins en un point de fixation, en particulier en plusieurs points de fixation, dans lequel le point de fixation sur le cadre (14) ou l'élément de cadre (40) est disposé entre deux modules de stator (12) voisins.

13. Système d'entraînement planaire (10) selon l'une quelconque des revendications précédentes, **caractérisé en ce que** des lignes de puissance ou de signal sont intégrées dans la plaque de montage (22).

14. Procédé de montage et de démontage de modules de stator (12) dans un système d'entraînement planaire (10) comprenant les étapes consistant à :
- fournir au moins deux modules de stator (12), dans lequel chacun des modules de stator (12) présente un corps de base (16) avec une surface de transport (18) et une face arrière (20) opposée à la surface de transport (18) ;
- fournir un cadre (14) avec plusieurs logements (24), dans lequel chaque logement (24) est conçu pour recevoir un module de stator (12) ;
- insérer les modules de stator (12) avec la surface de transport (18) en avant dans les logements (24) du cadre ;
- bloquer les modules de stator (12) dans les logements (24) respectifs au moyen d'un mécanisme de verrouillage (26) respectif.

15. Procédé selon la revendication 14, **caractérisé en ce que** le procédé comprend en outre l'étape consistant à :
- retirer les modules de stator (12) avec la face arrière (20) en avant des logements (24) du cadre (14).

16. Procédé selon la revendication 14 ou 15, **caractérisé en ce que** le système d'entraînement planaire (10) est un système d'entraînement planaire (10) selon l'une quelconque des revendications 1 à 13.
